# EUROPÄISCHE PATENTSCHRIFT

(11) **EP 3 143 102 B1**
(45) Veröffentlichungstag und Bekanntmachung des Hinweises auf die Patenterteilung: **29.12.2021**
(21) Anmeldenummer: 15723903.9
(22) Anmeldetag: 13.05.2015
(51) Int. Cl.: C10G 2/00, C01B 3/24, C10J 3/00, C10J 3/46

(54) **VERFAHREN UND VORRICHTUNG ZUR HERSTELLUNG VON SYNTHETISCHEN KOHLENWASSERSTOFFEN**
METHOD AND DEVICE FOR PRODUCING SYNTHETIC HYDROCARBONS
PROCÉDÉ ET DISPOSITIF POUR LA FABRICATION D'HYDROCARBURES SYNTHÉTIQUES

(30) Priorität: 13.05.2014 DE 102014006996
(43) Veröffentlichungstag der Anmeldung: 22.03.2017
(73) Patentinhaber: Caphenia GmbH, 83233 Bernau a. Chiemsee (DE)
(72) Erfinder: KÜHL, Olaf, 17489 Greifswald (DE)
(74) Vertreter: Wagner & Geyer
(86) Internationale Anmeldenummer: PCT/EP2015/060699
(87) Internationale Veröffentlichungsnummer: WO 2015/173360

(56) Entgegenhaltungen:
- EP-A1- 2 706 103
- WO-A1-03/027062
- WO-A1-2013/091879
- US-A- 6 085 512
- US-A1- 2001 045 397
- US-A1- 2007 227 069
- US-A1- 2010 285 576

## Beschreibung

Die vorliegende Erfindung bezieht sich auf ein Verfahren und eine Vorrichtung zur Herstellung von synthetischen Kohlenwasserstoffen, bei denen weniger Abwasser erzeugt wird.

Aus WO/2013/091879 ist ein Verfahren zur Herstellung von synthetischen funktionalisierten und/oder nicht-funktionalisierten Kohlenwasserstoffen bekannt, welches das Aufspalten eines kohlenwasserstoffhaltigen Fluids zu einem H₂/C-Aerosol aus Kohlenstoff C und Wasserstoff H₂ in einem Kohlenwasserstoffkonverter, das Leiten von wenigstens einem Teil des Aerosols von dem Kohlenwasserstoffkonverter in einen C-Konverter sowie das Einleiten von H₂O aus einer externen Quelle in den C-Konverter aufweist. In dem C-Konverter wird das H₂O mit dem H₂/C-Aerosol vermischt, wobei bei einer hohen Temperatur das H₂O und der Kohlenstoff in ein Gasgemisch aus Kohlenmonoxid CO und Wasserstoff umgewandelt werden. Das Kohlenmonoxid und der Wasserstoff werden in einem CO-Konverter mittels eines Katalysators in einem Fischer-Tropsch-Verfahren in synthetische Kohlenwasserstoffe umgewandelt. Neben den synthetischen Kohlenwasserstoffen entsteht in dem Fischer-Tropsch-Verfahren auch etwa die gleiche Menge an Wasser als Nebenprodukt, welches auch als Produktwasser bezeichnet wird. In dem Produktwasser ist ein Teil der im Fischer-Tropsch-Verfahren erzeugten Kohlenwasserstoffe gelöst. Die Löslichkeit von Kohlenwasserstoffen in Wasser beträgt in etwa 400 ppm. Wenn das Produktwasser unbehandelt abgelassen wird, können die gelösten Kohlenwasserstoffe die Umwelt schädigen. Daher sind für eine Reinigung oder Aufbereitung des Produktwassers erhebliche Investitionskosten und Betriebskosten nötig.

WO 03/027062 A1 (D5) beschreibt Ausführungen eines Verfahrens und Systems zur Herstellung von Synthesegas für einen Fischer-Tropsch-Reaktor. Als Synthesegasgeneratoren werden ein Reformator oder ein Plasma-Generator verwendet, in welchen Kohle oder Erdgas mit H₂O und Sauerstoff zu Synthesegas verarbeitet werden.
US 6 085 512 A beschreibt ein Verfahren/System zur Herstellung von Synthesegas mittels Dampfreformation, partieller Oxidation oder einer Kombination daraus. Das Synthesegas wird für einen Fischer-Tropsch-Reaktor verwendet, der Wasser als Nebenprodukt erzeugt. In einem Ausführungsbeispiel wird eine Gasturbine verwendet.

Die Aufgabe der vorliegenden Erfindung ist, ein Verfahren und eine Vorrichtung zur Herstellung von Kohlenwasserstoffen bereitzustellen, bei denen der Aufwand für die Aufbereitung des Produktwassers verringert werden kann.

Diese Aufgabe wird gelöst durch ein Verfahren nach Anspruch 1 und eine Vorrichtung nach Anspruch 5. Die abhängigen Ansprüche beziehen sich auf weitere Ausführungsbeispiele.

Im Folgenden wird ein Verfahren zur Herstellung von synthetischen Kohlenwasserstoffen beschrieben, bei dem Synthesegas erzeugt wird, indem in einem Schritt a) ein Gemisch aus Kohlenstoff und Wasserstoff mit Wasser in Kontakt gebracht wird, und zwar jeweils bei einer Temperatur von 800 - 1700 °C. Danach wird in einem Schritt b) das Synthesegas mittels eines Fischer-Tropsch-Verfahrens in synthetische, funktionalisierte und/oder nicht-funktionalisierte Kohlenwasserstoffe umgewandelt, wobei es mit einem geeigneten Katalysator in Kontakt gebracht wird, und wobei Wasser als Nebenprodukt anfällt, in dem ein Teil der synthetischen Kohlenwasserstoffe gelöst ist. Dann wird in einem Schritt c) zumindest ein Teil des als Nebenprodukt erzeugten Wassers dem Schritt a) zugeführt. Die im Wasser gelösten Kohlenwasserstoffe zerfallen bei der hohen Temperatur im Schritt a) in partikelförmigen Kohlenstoff und Wasserstoff. Der Kohlenstoff wird in Anwesenheit von Wasser und bei hoher Temperatur im Schritt a) in CO umgewandelt und bildet einen Teil des erzeugten Synthesegases. Auf diese Weise wird eine aufwändige Reinigung der Hälfte des im Schritt b) als Nebenprodukt erzeugten Wassers vermieden. Das Gemisch aus Kohlenstoff und Wasserstoff wird vor dem In-Kontakt-bringen mit Wasser im Schritt a) durch Aufspaltung eines kohlenwasserstoffhaltigen Fluids durch Zuführen von Energie unter Sauerstoffabschluss erzeugt. Auf diese Weise können feine Kohlenstoffpartikel erzeugt werden, die auch Wärmeenergie enthalten. Die Wärmeenergie des Kohlenstoffs stellt zumindest einen Teil der Energie für die Umwandlung im Schritt a) bereit.

Vorteilhafterweise wird die Temperatur des als Nebenprodukt erzeugten Wassers beim Zuführen zum Schritt a) auf mindestens eine Zerfallstemperatur gesteuert oder geregelt, bei der die darin gelösten synthetischen Kohlenwasserstoffe in Kohlenstoff und Wasserstoff zerfallen. So wird der beim Zerfall entstehende partikelförmige Kohlenstoff in Anwesenheit von Wasserdampf in gasförmiges CO umgewandelt, welches leicht geleitet und weiterverarbeitet werden kann.

Vorzugsweise liegt der Kohlenstoff bei dem Verfahren als C-Partikel vor, die mit Wasserstoff zu einem Aerosol vermischt sind. So liegt die H₂/C-Mischung als Fluid vor, welches sich leicht in einer Anlage zur Ausführung des Verfahrens transportieren lässt. Außerdem entfällt eine Trennung von Kohlenstoff und Wasserstoff, welche beide eine hohe Temperatur aufweisen, und der technische Aufwand kann verringert werden. Weiter kann der Wasserstoff als Energieträger dienen.

Die Aufspaltung des kohlenwasserstoffhaltigen Fluids wird in einem Kohlenwasserstoffkonverter ausgeführt, der zumindest teilweise durch das als Nebenprodukt erzeugte Wasser gekühlt wird. So wird eine zu große thermische Belastung des Kohlenwasserstoffkonverters vermieden und seine Lebensdauer verlängert. Diese Ausführung ist besonders vorteilhaft, wenn in dem Kohlenwasserstoffkonverter Temperaturen von mehr als 1000°C auftreten.

Erfindungsgemäß wird ein Teil des als Nebenprodukt erzeugten Wassers (Produktwasser) bei einer Temperatur oberhalb der Zerfallstemperatur der im Wasser gelösten synthetischen Kohlenwasserstoffe verdampft, und der Dampf wird zum Antreiben einer Dampfturbine verwendet. So kann ein Teil des Produktwassers, der nicht im Schritt a) verwendet werden kann, zur Energieerzeugung dienen. Die im Wasser gelösten synthetischen Kohlenwasserstoffe zerfallen oberhalb der Zerfallstemperatur in partikelförmigen Kohlenstoff und gasförmigen Wasserstoff. Der Kohlenstoff wird wiederum in Anwesenheit von Wasser in gasförmiges CO umgewandelt. Das Wasser kann nach dem Durchlaufen der Dampfturbine durch Kondensation leicht vom gasförmigen CO und vom gasförmigen Wasserstoff getrennt werden.

Im Folgenden wird auch eine Vorrichtung bzw. Anlage zur Herstellung von synthetischen Kohlenwasserstoffen beschrieben, die einen Kohlenwasserstoffkonverter aufweist, der zum Aufspalten eines Kohlenwasserstoff enthaltenden Fluids zu einem H₂/C-Aerosol geeignet ist und der wenigstens einen Prozessraum mit wenigstens einem Kohlenwasserstoffeingang für ein Kohlenwasserstoff enthaltendes Fluid und wenigstens einem C-Ausgang für C-Partikel oder H₂/C-Aerosol und wenigstens eine Einheit zum Einbringen von Energie in den Prozessraum aufweist, wobei die Energie wenigstens teilweise aus Wärme besteht. Die Vorrichtung weist weiter einen C-Konverter zur Umwandlung von Kohlenstoff oder Kohlenwasserstoff und Wasser auf, der einen Prozessraum mit einem Eingang für wenigstens Wasser, einen Eingang für wenigstens Kohlenstoff und einen Synthesegasausgang aufweist; wobei der C-Ausgang des Kohlenwasserstoffkonverters mit dem C-Eingang für wenigstens Kohlenstoff des C-Konverters verbunden ist. Weiter weist die Vorrichtung einen CO-Konverter auf, der geeignet ist, ein Fischer-Tropsch-Verfahren zur Herstellung von synthetischen funktionalisierten und/oder nicht-funktionalisierten Kohlenwasserstoffen auszuführen und einen Prozessraum aufweist, in dem ein Katalysator angeordnet ist und mit Mitteln zum Leiten des Synthesegases in Kontakt mit dem Katalysator, und mit einer Steuereinheit zum Steuern oder Regeln der Temperatur des Katalysators und/oder des Synthesegases auf eine vorbestimmte Temperatur, wobei der Prozessraum des CO-Konverters mit dem Synthesegasausgang des C-Konverters verbunden ist. Der CO-Konverter weist einen Wasserausgang für Wasser auf, welches während der Erzeugung von synthetischen Kohlenwasserstoffen als Nebenprodukt erzeugt wird. Die Vorrichtung weist auch eine Wasserleitung auf, welche vom Wasserausgang des CO-Konverters zum Eingang für wenigstens Wasser des C-Konverters verläuft. So kann zumindest ein Teil (vorzugsweise die Hälfte) des als Nebenprodukt erzeugten Wassers, in dem auch synthetische Kohlenwasserstoffe gelöst sind, ohne aufwändige Reinigung in den C-Konverter geleitet werden. Die Vorrichtung weist außerdem Wärmetauschermittel zum Kühlen des Kohlenwasserstoffkonverters oder einer Synthesegasleitung zwischen dem C-Konverter und dem CO-Konverter auf, wobei die Wasserleitung vom Wasserausgang des CO-Konverters zu den Wärmetauschermitteln und von den Wärmetauschermitteln zum Eingang für wenigstens Wasser des C-Konverters verläuft. Dabei dient das Produktwasser vor dem Einleiten in den C-Konverter auch noch zur Kühlung des Kohlenwasserstoffkonverters und verlängert so dessen Lebensdauer. Die Vorrichtung weist weiter eine Dampfturbine mit Turbinenschaufeln und einem Dampfeingang auf. Der Dampfeingang der Dampfturbine ist mit den Wärmetauschermitteln verbunden und ist geeignet, einen Teil des als Nebenprodukt erzeugten und durch die Wärmetauschermittel geleiteten Wassers als Dampf zu den Turbinenschaufeln zu leiten. So kann der nicht im C-Konverter verwendete Teil des Produktwassers zur Energieerzeugung verwendet werden. Weiter können die im Produktwasser gelösten Kohlenwasserstoffe in gasförmige Stoffe (CO und H₂) umgewandelt werden, die sich beim Kondensieren des Dampfes nach der Dampfturbine leicht vom Wasser trennen lassen.

Vorzugsweise sind der Kohlenwasserstoffkonverter, sein C-Ausgang, der C-Konverter und sein C-Eingang für wenigstens Kohlenstoff so ausgebildet, dass im Kohlenwasserstoffkonverter gebildeter Kohlenstoff und Wasserstoff gemeinsam in den C-Konverter geleitet werden. So wird ein einfacher Aufbau der Vorrichtung erreicht und heißer Wasserstoff kann als Energieträger zum Aufheizen des C-Konverters genutzt werden.

In einer Ausgestaltung der Vorrichtung sind der Kohlenwasserstoffkonverter und der C-Konverter zu einem kombinierten Konverter zusammengefasst. Dabei wird der Prozessraum des Kohlenwasserstoffkonverters durch eine Kohlenwasserstoffkonverterzone gebildet, und der Prozessraum des C-Konverter wird durch eine C-Konverterzone des kombinierten Konverters gebildet, und der C-Ausgang des Kohlenwasserstoffkonverters und der Eingang für wenigstens Kohlenstoff des C-Konverters werden durch einen Übergang zwischen der Kohlenwasserstoffkonverterzone und der C-Konverterzone gebildet. So wird ein Wärmeverlust zwischen dem Kohlenwasserstoffkonverter und dem C-Konverter vermieden und ein einfacher Aufbau der gesamten Vorrichtung erreicht.

Die Erfindung wird nachfolgend unter Bezugnahme auf bestimmte Ausführungsformen anhand der Zeichnungen näher erläutert.
- Fig. 1: ist eine Darstellung einer Vorrichtung zur Herstellung von synthetischen Kohlenwasserstoffen; und
- Fig. 2: ist eine Darstellung einer alternativen Vorrichtung zur Herstellung von synthetischen Kohlenwasserstoffen.

Es sei bemerkt, dass sich in der folgenden Beschreibung die Ausdrücke oben, unten, rechts und links sowie ähnliche Angaben auf die in den Figuren dargestellten Ausrichtungen bzw. Anordnungen beziehen und nur zur Beschreibung der Ausführungsbeispiele dienen. Diese Ausdrücke sind jedoch nicht im einschränkenden Sinne zu verstehen. Ferner werden in den unterschiedlichen Figuren zum Teil dieselben Bezugszeichen verwendet, sofern gleiche oder ähnliche Teile bezeichnet werden. In der vorliegenden Beschreibung werden weiter Prozesse und Vorrichtungen beschrieben, die "heiße" Stoffe oder "heiße" Prozesse ausführen. Im Zusammenhang mit dieser Beschreibung soll der Ausdruck "heiß" eine Temperatur über 200°C und vorzugsweise über 300°C beschreiben. Sofern in der vorliegenden Beschreibung synthetische Kohlenwasserstoffe erwähnt werden, sind damit alle synthetischen funktionalisierten und/oder nicht-funktionalisierten Kohlenwasserstoffen gemeint.

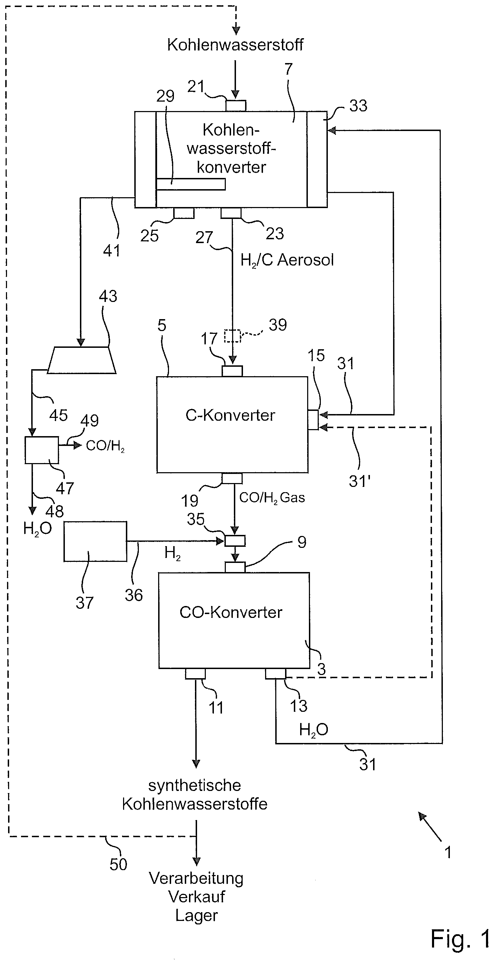

Fig. 1 stellt schematisch eine Vorrichtung 1 zur Erzeugung und Herstellung von synthetischen Kohlenwasserstoffen dar. Die Vorrichtung 1 weist einen CO-Konverter 3 zur Herstellung von synthetischen Kohlenwasserstoffen, einen C-Konverter 5 und einen Kohlenwasserstoffkonverter 7 auf. Aus der Fig. 1 wird auch der grundlegende Verfahrensablauf zur Erzeugung und Herstellung von synthetischen Kohlenwasserstoffen gemäß dieser Beschreibung deutlich.

Der CO-Konverter 3 ist ein Fischer-Tropsch-Konverter, der katalytisch ein Synthesegas zu synthetischen funktionalisierten und/oder nicht-funktionalisierten Kohlenwasserstoffen und Wasser (sogenanntes Produktwasser als Nebenprodukt) umwandelt. Der CO-Konverter 3 weist einen Prozessraum auf, in dem ein Katalysator angeordnet ist, weiter Mittel zum Leiten von Synthesegas in Kontakt mit dem Katalysator, und eine Steuereinheit zum Steuern oder Regeln der Temperatur des Katalysators und/oder des Synthesegases auf eine vorbestimmte Temperatur. Das Synthesegas wird über einen Synthesegaseingang 9 in den Prozessraum geleitet. Die Kohlenwasserstoffe werden über einen Kohlenwasserstoffausgang 11 aus dem CO-Konverter 3 abgeleitet, und das Produktwasser wird aus einem H₂O-Ausgang 13 abgeleitet. Dem Fachmann sind verschiedene Ausführungen von Fischer-Tropsch-Reaktoren und Fischer-Tropsch-Verfahren bekannt, die hier nicht im Detail dargestellt werden sollen. Die Hauptreaktionsgleichungen lauten wie folgt:

n CO + (2n+1) H₂ → CnH₂ₙ₊₂ + n H₂O

für Alkane

n CO + (2n) H₂ → CₙH₂ₙ + n H₂O

für Alkene

n CO + (2n) H₂ → CₙH₂ₙ₊₁OH + (n-1) H₂O

für Alkohole

Die Fischer-Tropsch-Verfahren können als Hochtemperatur-Verfahren oder als Niedertemperatur-Verfahren durchgeführt werden, wobei die Prozesstemperaturen im Allgemeinen zwischen 200 und 400°C liegen. Bekannte Varianten des Fischer-Tropsch-Verfahrens sind u.a. die Hochlast-Synthese, die Synthol-Synthese und das SMDS-Verfahren der Firma Shell (SMDS = Shell Middle Distillate Synthesis). Durch einen Fischer-Tropsch-Konverter wird typischerweise eine Kohlenwasserstoffverbindung aus Flüssiggasen (Propan, Butan), Benzin, Kerosin (Dieselöl), Weichparaffin, Hartparaffin, Methan, Dieselkraftstoff oder eine Mischung mehrerer derselben erzeugt. Die Fischer-Tropsch-Synthese ist exotherm, wie dem Fachmann bekannt ist. Die Reaktionswärme aus dem Fischer-Tropsch-Verfahren kann mittels eines (in den Figuren nicht gezeigten) Wärmetauschers, beispielsweise zum Vorwärmen von Wasser oder kohlenwasserstoffhaltigem Fluid verwendet werden.

Das Synthesegas für das Fischer-Tropsch-Verfahren kommt aus dem C-Konverter 5, welcher irgendein geeigneter C-Konverter sein kann, der Synthesegas (Syngas) aus Kohlenstoff (C) und Wasser (H₂O) erzeugen kann. Der C-Konverter 5 weist einen Prozessraum mit einem Eingang 15 für wenigstens Wasser, einen C-Eingang 17 für wenigstens Kohlenstoff und einen Synthesegasausgang 19 auf. Der Synthesegasausgang 19 des C-Konverters 5 ist mit dem Synthesegaseingang 9 des CO-Konverters 3 verbunden.

Im C-Konverter 5 wird H₂O über heißen Kohlenstoff geleitet oder auch als Wasserdampf in einem Strom aus Kohlenstoff und Wasserstoff eingeleitet und hiermit vermischt, um gemäß der chemischen Gleichung C + H₂O → CO + H₂ umgewandelt zu werden. Im C-Konverter 5 laufen folgende Reaktionen ab:

| | | |
|---|---|---|
| C + H₂O → CO + H₂ | + 131,38 kJ/mol | endotherm |
| CO + H₂O → CO₂ | + H₂ - 41,19 kJ/mol | exotherm |

Im Boudouard-Gleichgewicht erfolgt die Reaktion:

| | | |
|---|---|---|
| 2 C + O₂ → 2 CO | + 172,58 kJ/mol | endotherm |

Da alle drei Reaktionen im Gleichgewicht miteinander stehen, findet der Prozess im C-Konverter 5 vorzugsweise bei hohen Temperaturen von 800 bis 1700°C, vorzugsweise 1000 bis 1600°C statt, da bei niedriger Temperatur die zweite Reaktion bevorzugt werden würde. Die für das Erreichen dieser Temperatur erforderliche Wärme wird primär durch das Material zu Verfügung gestellt, das aus dem Kohlenwasserstoffkonverter 7 austritt, wie unten noch näher erläutert wird. Das Wasser (H₂O) im C-Konverter 5 ist bei diesen Bedingungen dampfförmig und kann auch schon in Dampfform eingeleitet werden. Die Zugabe von Wasser wird im Betrieb der Vorrichtung 1 so gesteuert, dass ein Überschuss an Wasser vermieden wird, um ein starkes Abkühlen zu vermeiden. Bei einer übermäßigen Abkühlung im C-Konverter 5 würde ebenfalls die zweite Reaktion bevorzugt ablaufen.

Der C-Konverter 5 arbeitet am besten bei hohen Temperaturen von 1000 bis 1600°C, um die exotherme Water-Shift-Reaktion CO + H₂O → CO₂ + H₂ zurückzudrängen und so den Anteil an Kohlenmonoxid im Synthesegas zu optimieren. Die Reaktionen im C-Konverter 5 sind dem Fachmann bekannt und werden daher hier nicht genauer beschrieben.

Der Kohlenwasserstoffkonverter 7 weist einen Kohlenwasserstoffeingang 21, einen C-Ausgang 23 sowie einen optionalen Wasserstoffausgang 25 auf. Der Kohlenwasserstoffkonverter 7 und der C-Konverter 5 sind derart angeordnet, dass der C-Ausgang 23 des Kohlenwasserstoffkonverters 7 über eine direkte Verbindung 27 mit dem C-Eingang 17 des C-Konverters 5 verbunden ist, wobei der C-Ausgang 23 auch direkt den C-Eingang 17 des C-Konverters 5 bilden kann. So kann Kohlenstoff aus dem Kohlenwasserstoffkonverter 7 direkt in den C-Konverter 5 transportiert werden.

Der Kohlenwasserstoffkonverter 7 ist irgendein Kohlenwasserstoffkonverter, der eingespeiste Kohlenwasserstoffe in Kohlenstoff und Wasserstoff umwandeln bzw. aufspalten kann. Der Kohlenwasserstoffkonverter 7 kann thermisch betrieben oder mittels eines Plasmas betrieben werden. In einem thermisch betriebenen Kohlenwasserstoffkonverter wird ein in einen Reaktionsraum eingeleitetes Kohlenwasserstoff-Fluid durch eine beliebige Wärmequelle auf eine Zersetzungstemperatur aufgeheizt. In einem mit Plasma betriebenen Kohlenwasserstoffkonverter erfolgt die Energiezufuhr über einen Plasmabogen. Ein eingeleitetes Kohlenwasserstoff-Fluid zerfällt bei der Zersetzungstemperatur in Kohlenstoff und Wasserstoff. Die Auftrennung der Kohlenwasserstoffe sollte möglichst unter Ausschluss von Sauerstoff erfolgen, um die unerwünschte Bildung von Kohlenstoffoxiden oder Wasser zu unterbinden. Geringe Mengen an Sauerstoff, die beispielsweise mit dem Kohlenwasserstoffen eingebracht werden, sind aber auch wiederum für den Prozess nicht schädlich.

Der Kohlenwasserstoffkonverter 7 weist einen Prozessraum mit einem Einlass für ein kohlenwasserstoffhaltiges Fluid, wenigstens eine Einheit zum Einbringen von Aufspaltungsenergie in das Fluid und wenigstens den oben genannten C-Ausgang 23 auf. Die Aufspaltungsenergie wird wenigstens teilweise durch Wärme zur Verfügung gestellt, die beispielsweise durch ein Plasma erzeugt wird (Plasmareaktor). Sie kann aber auch auf andere Weise zur Verfügung gestellt werden (thermischer Reaktor). Primär erfolgt eine Aufspaltung über Wärme. Das Fluid sollte auf über 1000°C insbesondere auf eine Temperatur über 1500°C aufgeheizt werden. Im Fall eines mit Plasma betrieben Kohlenwasserstoffkonverters kann als Plasmagas jedes geeignete Gas ausgewählt werden, welches von außen zugeführt wird oder im Kohlenwasserstoffkonverter entsteht. Als Plasmagas sind beispielsweise inerte Gase geeignet, z.B. Argon oder Stickstoff. Andererseits bieten sich Wasserstoffgas H₂, CO oder Synthesegas an, da Wasserstoffgas bei der Aufspaltung der Kohlenwasserstoffe und CO bzw. Synthesegas bei der Weiterreaktion des Kohlenstoffs sowieso anfällt.

Bei der dargestellten Ausführungsform wird ein Kvaerner-Reaktor als Kohlenwasserstoffkonverter 7 eingesetzt, der mittels eines Plasmabogens in einem Plasma-Brenner 29 die erforderliche Wärme zur Verfügung stellt. Es sind aber auch andere Reaktoren bekannt, die bei niedrigeren Temperaturen insbesondere unter 1000°C arbeiten und neben der Wärme zusätzliche Energie in den Kohlenwasserstoff einbringen, wie beispielsweise über ein Mikrowellenplasma. Wie nachfolgend noch näher erläutert wird, zieht die Erfindung beide Reaktortypen (und auch solche die ohne ein Plasma arbeiten) in betracht, insbesondere auch in Kombination miteinander. Kohlenwasserstoffkonverter die bei einer Temperatur im Prozessraum von mehr als 1000°C arbeiten werden als Hochtemperatur-Reaktoren bezeichnet, während solche, die bei Temperaturen unter 1000°C arbeiten, insbesondere bei einer Temperatur zwischen 200°C und 1000°C, als Niedertemperatur-Reaktoren bezeichnet werden.

In dem Kohlenwasserstoffkonverter 7 werden mittels Wärme und/oder einem Plasma Wasserstoff und Kohlenstoff aus Kohlenwasserstoffen (CnHm) generiert. Die Kohlenwasserstoffe werden bevorzugt in Gasform in den Prozessraum eingebracht. Bei unter Normalbedingungen flüssigen Kohlenwasserstoffen können diese vor dem Einbringen in den Kohlenwasserstoffkonverter 7 in Gasform gebracht werden, oder sie könnten auch in fein zerstäubter Form eingeleitet werden. Alle diese Formen werden hier als Fluide bezeichnet. Das kohlenwasserstoffhaltige Fluid besteht vorzugsweise aus einem Strom von Erdgas, Methan, Flüssiggasen oder Schweröl und insbesondere vorzugsweise aus einem Strom von konventionellem oder nicht-konventionellem Erdgas sowie Flüssiggasen ("wet gases").

Die Vorrichtung 1 weist weiter eine Produktwasserleitung 31 auf, welche vom H₂O-Ausgang 13 des CO-Konverters 3 zum Eingang für wenigstens Wasser des C-Konverters verläuft. Die Produktwasserleitung 31 verläuft zuerst zu einem Wärmetauscher 33, der zur Kühlung am Kohlenwasserstoffkonverter 7 angebracht ist, und dann weiter zum Eingang 15 für wenigstens Wasser des C-Konverters 5. Alternativ kann eine Produktwasserleitung 31' vom H₂O-Ausgang 13 des CO-Konverters 3 direkt zum Eingang 15 des C-Konverters 5 führen, wie in den Figuren in gestrichelter Linie gezeigt.

Der Wärmetauscher 33 kann beispielsweise an der Außenwand des Kohlenwasserstoffkonverters 7 angebracht sein oder in dieser integriert sein. Der Wärmetauscher 33 kann ein oder mehrere Rohre oder Kammern aufweisen. Beispielsweise kann die Produktwasserleitung 31 zumindest in Teilen der Außenwand des Kohlenwasserstoffkonverters 7 verlaufen. Die Produktwasserleitung 31 kann beispielsweise mehrfach um die Außenwand des Kohlenwasserstoffkonverters 7 herumgeführt werden. Der Wärmetauscher 33 kann weiter als eine doppelwandige Hülle des Kohlenwasserstoffkonverters 7 geformt sein. Weiter kann die Funktion des Wärmetauschers 33 durch Zwischenräume zwischen den Außenwänden von mehreren nebeneinander liegenden Kohlenwasserstoffkonvertern 7 und C-Konvertern 5 vorgesehen werden. Die nebeneinander liegenden Kohlenwasserstoffkonverter 7 und C-Konverter 5 können in diesem Fall durch eine gemeinsame Außenhülle eingeschlossen werden, so dass Zwischenräume zwischen den Konvertern 5, 7 selbst und zwischen den Konvertern 5, 7 und der Außenhülle gebildet werden. Durch diese Zwischenräume kann das Produktwasser geleitet werden und somit aufgeheizt werden.

In einer in den Figuren nicht gezeigten Ausführung ist alternativ der Wärmetauscher 33 oder ein zusätzlicher Wärmetauscher an einer Synthesegasleitung zwischen dem C-Konverter 5 und dem CO-Konverter 3 angebracht. Beim Betrieb kühlt ein dort angebrachter Wärmetauscher 33 das Synthesegas, welches vom C-Konverter 5 (mehr als 850°C) zum CO-Konverter 3 (ca. 250-400°C) geleitet wird. Die weiteren Erklärungen zum Wärmetauscher 33 gelten auch für diese in den Figuren nicht gezeigte Anordnung.

Die Vorrichtung 1 weist weiter einen optionalen Mischer 35 auf, der geeignet ist, dem Synthesegas aus dem C-Konverter zusätzlichen Wasserstoff beizumischen. Der zusätzliche Wasserstoff kann über eine Leitung 36 aus einer beliebigen Wasserstoffquelle 37 geliefert werden, wobei die Wasserstoffquelle 37 beispielsweise ein Wasserstoffvorratsbehälter oder ein Kohlenwasserstoffkonverter 7 ist. In einer (nicht gezeigten) Ausführung, die keinen Mischer 35 aufweist, kann zusätzlicher Wasserstoff direkt in den CO-Konverter 3 geleitet werden.

Nach dem C-Ausgang 23 des Kohlenwasserstoffkonverters 7 (z.B. am Eingang des nachfolgenden C-Konverters 5) kann ein optionaler Filter 39 angeordnet sein, der geeignet ist, kohlenstoffhaltige Partikel aus einem C/H₂-Aerosol bei den hier auftretenden Temperaturen herauszufiltern. Der optionale Filter 39 kann auch einen integralen Bestandteil des C-Konverters 5 bilden. Ein solcher Filter, der auch im C-Konverter 5 integriert sein kann, ist beispielsweise aus der deutschen Patentanmeldung Nr. 10 2013 013 443 bekannt. Wenn ein Filter 39 eingesetzt wird, kommt im Betrieb im Wesentlichen nur Kohlenstoff in Form von C-Partikeln in den C-Eingang 17 des C-Konverters 5. Im Folgenden wird davon ausgegangen, dass kein Filter 39 vorgesehen ist und somit ein C/H₂-Aerosol in den ersten C-Konverter 5 geleitet wird. Die Ausführungsbeispiele funktionieren aber genauso, wenn nur C-Partikel weitergeleitet werden, die durch den Filter 39 vom Wasserstoff getrennt wurden.

Aufgrund der hohen Temperatur im Kohlenwasserstoffkonverter 7 wird durch Abwärme im Betrieb auch der Wärmetauscher 33 stark aufgeheizt, d.h. auf mehrere Hundert Grad Celsius. Daher wird das in den Wärmetauscher 33 eingeleitete Produktwasser als Dampf vorliegen und unter Druck stehen. Der Dampf enthält hauptsächlich Wasser und geringe Anteile von Kohlenmonoxid und Wasserstoff. Kohlenmonoxid und Wasserstoff entstehen aus den im Produktwasser gelösten Kohlenwasserstoffen sobald die Zersetzungstemperaturen der gelösten Kohlenwasserstoffe erreicht werden. Die Vorrichtung 1 weist weiter eine Dampfleitung 41 auf, die mit dem Wärmetauscher 33 verbunden ist. Über die Dampfleitung 41 wird ein Teil des unter Druck stehenden Dampfes aus dem Wärmetauscher 33 abgeleitet werden und zu einer Dampfturbine 43 geleitet werden. Die Dampfturbine 43 weist eine Turbinenabgasleitung 45 auf, die zu einer Trennvorrichtung 47 führt. In der Trennvorrichtung werden die Bestandteile des Dampfes voneinander getrennt. Ein Beispiel einer Trennvorrichtung weist einen Kondensator auf, in dem das dampfförmige Wasser zu flüssigem Wasser kondensiert. Das kondensierte Wasser enthält keine gelösten Kohlenwasserstoffe und kann über eine Wasserleitung 48 abgeleitet werden. Das Kohlenmonoxid und der Wasserstoff sind sowohl bei hoher als auch bei niedriger Temperatur gasförmig und kondensieren bei einer Abkühlung im Kondensator nicht. Daher werden Kohlenmonoxid und Wasserstoff als Gasgemisch (Synthesegas) über eine Gasleitung 49 aus der Trennvorrichtung abgeleitet. Kohlenmonoxid und Wasserstoff können dann an geeigneter Stelle wieder in die Vorrichtung 1 eingeleitet werden, beispielsweise in den C-Konverter 5, in den Mischer 35 oder in den CO-Konverter 3. Sofern als Produkt des CO-Konverters 3 eine Mischung von Kohlenwasserstoffen vorliegt, die nach ihrer Auftrennung und Verfeinerung nicht direkt weiterverarbeitet oder als Fertigprodukt profitabel verkauft werden können, können diese Kohlenwasserstoffe (beispielsweise Methan oder kurzkettige Paraffine) in den hier beschriebenen Prozess zurückgeführt werden. Zu diesem Zweck weist die Vorrichtung 1 eine optionale Rückleitung 50 auf, mit deren Hilfe ein Teil der synthetisch erzeugten Kohlenwasserstoffe zurück zum Kohlenwasserstoffeingang 21 des Kohlenwasserstoffkonverters 7 geleitet werden können. Je nach Zusammensetzung der zurückgeleiteten, synthetisch erzeugten Kohlenwasserstoffe erfolgt vor der Einleitung in den Kohlenwasserstoffeingang 21 noch eine Aufbereitung bzw. Abtrennung von nicht geeigneten Kohlenwasserstoffen.

Der Betrieb der Vorrichtung 1 gemäß Fig. 1 wird näher erläutert. Im Folgenden wird davon ausgegangen, dass der Kohlenwasserstoffkonverter 7 ein Hochtemperatur-Reaktor des Kvaerner-Typs ist. Kohlenwasserstoffe enthaltende Fluide (insbesondere in Gasform) werden über den Kohlenwasserstoffeingang 11 in den Kohlenwasserstoffkonverter 7 eingeleitet. Wenn der Kohlenwasserstoff beispielsweise Methan (CH₄) ist, so entstehen 1 mol Kohlenstoff und 2 mol Wasserstoff aus 1 mol Methan. Bei anderen Kohlenwasserstoffen ergeben sich entsprechend andere Molverhältnisse von Kohlenstoff und Wasserstoff. Die Kohlenwasserstoffe werden in dem Kohlenwasserstoffkonverter 7 bei etwa 1600°C gemäß der folgenden Reaktionsgleichung umgewandelt, wobei die zugeführte Energie Wärme ist, die im Plasma mittels elektrischer Energie erzeugt wird:

CₙHₘ + Energie → n C + m/2 H₂

Bei entsprechender Prozessführung ist der Kohlenwasserstoffkonverter 7 (Kvaerner-Reaktor) in der Lage im kontinuierlichen Betrieb eine nahezu vollständige Umwandlung des Kohlenwasserstoffs in seine Bestandteile Wasserstoff und Kohlenstoff zu erreichen (abhängig von der Temperatur mehr als 94% Umwandlung der Kohlenwasserstoffe, siehe oben). Der Wasserstoff und der Kohlenstoff liegen nach der Aufspaltung als ein Gemisch vor, d.h. als H₂/C-Aerosol.

Das H₂/C-Aerosol wird aus dem Kohlenwasserstoffkonverter 7 ausgeleitet und in den C-Konverter 5 geleitet. Der Wasserstoff dient als Trägergas für den Kohlenstoff (C-Partikel) und beeinträchtigt nicht den Umwandlungsprozess im C-Konverter 5, der Wasserstoff kann aber als zusätzlicher Wärmeträger dienen. Das H₂/C-Aerosol wird aus dem C-Ausgang 23 in den C-Eingang 17 des C-Konverters 5 geleitet. Aus dem C-Ausgang 23 kommt also im Betrieb nicht nur Kohlenstoff sondern auch Wasserstoff. Genauso strömt in den C-Eingang 17 nicht nur Kohlenstoff sondern auch Wasserstoff. Da das aus dem Kohlenwasserstoffkonverter 7 austretende H₂/C-Aerosol eine hohe Temperatur aufweist (bevorzugt über 1000°C), kann die darin enthaltene Wärmeenergie zum Erhalten der erforderlichen Temperatur für den Umwandlungsprozesses im C-Konverter 5 verwendet werden, der vorzugsweise bei einer Temperatur von ca. 1000°C arbeitet.

Im C-Konverter 5 wird der heiße Dampf (Wasserdampf sowie Wasserstoff und Kohlenmonoxid) aus der Produktwasserleitung 31 über den Eingang 15 für wenigstens Wasser eingeleitet. So wird Wasserdampf mit dem H₂/C-Aerosol vermischt und so mit dem heißen Kohlenstoff in Kontakt gebracht.

Der C-Konverter 5 arbeitet am besten bei hohen Temperaturen (bevorzugt bei einer Temperatur > 800°C und insbesondere bevorzugt bei > 1000°C), da es sich um eine endotherme Reaktion handelt und die Water-Shift-Reaktion, die zu ihr in Konkurrenz steht eine exotherme Reaktion ist. Die Reaktion, welche dem Fachmann bekannt ist, ist abhängig von Druck und Temperatur und wird hier nicht im Einzelnen beschrieben. Entweder die Menge des in den C-Konverter 5 eingeleiteten Wassers oder die Menge des Kohlenstoffs kann über geeignete Mittel gesteuert und/oder geregelt werden.

C + H₂O → CO + H₂;

ΔH = +131,38 kJ/mol

Allerdings ist auch hier das Boudouard-Gleichgewicht der begrenzende Faktor, weswegen bei Temperaturen oberhalb von 1000°C und in Abwesenheit eines Wasserüberschusses fast ausschließlich ein Gemisch von Kohlenmonoxid und Wasserstoff vorliegt. Der eingeleitete Dampf ist schon auf eine hohe Temperatur von ca. 700 - 900°C vorgewärmt, da das Produktwasser bereits durch den Wärmetauscher 33 zur Kühlung des Kohlenwasserstoffkonverters 7 geleitet wurde. Der größte Teil der im Produktwasser gelösten Kohlenwasserstoffe wird durch die Abwärme des Kohlenwasserstoffkonverters 7 bereits im Wärmetauscher 33 in Kohlenstoff und Wasserstoff aufgespaltet. Die im Produktwasser befindlichen Kohlenwasserstoffe sind nicht hitzebeständig sondern werden pyrolytisch gespalten. Die Abwärme des Kohlenwasserstoffkonverters 7 reicht aus, um die Aufspaltungs- bzw. Zersetzungstemperatur der Kohlenwasserstoffe zu erreichen. Da die Kohlenwasserstoffe im Produktwasser in hoher Verdünnung vorliegen (etwa 400 ppm), kommt es unter diesen Bedingungen nicht zu einer Aggregierung des Kohlenstoffs und somit auch nicht zum Auftreten großer C-Partikel, die zu einer Verstopfung der Rohrleitungen führen könnten. Vielmehr reagiert der Kohlenstoff bereits im stade nascendum zu Synthesegas weiter. Bei der hohen Temperatur im nachfolgenden C-Konverter 5 werden auch restliche Kohlenwasserstoffe, die möglicherweise noch im dampfförmigen Produktwasser mitgeführt werden, in Kohlenstoff und Wasserstoff aufgespaltet.

Bei einer nicht erfindungsgemäß optionalen Ausführung, bei der das Produktwasser durch die Produktwasserleitung 31' geleitet wurde und somit nicht durch den Wärmetauscher 33, hat das Produktwasser eine geringere Temperatur, die etwa der Temperatur nach dem Austritt aus dem CO-Konverter 3 entspricht (200 - 350°C).

Das Gasgemisch aus CO und H₂ aus dem C-Konverter 5 wird dann zum CO-Konverter 3 geleitet und durch das oben erwähnte Fischer-Tropsch-Verfahren in synthetische Kohlenwasserstoffe und Produktwasser umgewandelt. Das Produktwasser wird durch die Produktwasserleitung 31 wieder in der oben erwähnten Weise in den C-Konverter 5 geleitet.

Im Betrieb kann etwa die Hälfte des im CO-Konverter 3 erzeugten Produktwassers wieder in den C-Konverter eingeleitet werden. Somit ergibt sich gegenüber dem Stand der Technik der Vorteil, dass nur noch halb so viel Produktwasser gereinigt werden muss, bevor es in die Umwelt abgeleitet werden kann.

Eine weitere Verbesserung kann erreicht werden, wenn mehr Produktwasser als im C-Konverter 5 benötigt durch den Wärmetauscher 33 geleitet wird und verdampft wird. Durch die hohen Temperaturen im Wärmetauscher zerfallen die im Produktwasser gelösten Kohlenwasserstoffe (Zerfalltemperatur > 450°C) bereits im Wärmetauscher 33 in Kohlenstoff und Wasserstoff. Der Wärmetauscher funktioniert daher wie ein (oben erwähnter) thermischer Kohlenwasserstoffkonverter). Der Kohlenstoff reagiert im Wärmetauscher 33 gleich mit dem ebenfalls vorhandenen Wasserdampf gemäß der oben genannten Gleichung C + H₂O → CO + H₂, und es entsteht das bereits erwähnte Dampfgemisch aus Wasserdampf, Kohlenmonoxid und Wasserstoff. Der überschüssige Anteil des Dampfgemisches, der nicht in den C-Konverter 5 eingeleitet wird, kann über die Dampfleitung 41 zur Dampfturbine 43 geleitet werden. Die Dampfturbine 43 kann zur Energieerzeugung verwendet werden, beispielsweise zum Betrieb eines elektrischen Generators.

Nachdem das Dampfgemisch an der Dampfturbine 43 Arbeit verrichtet hat, wird es über die Turbinenabgasleitung 45 zur Trennvorrichtung 47 geleitet. In der Trennvorrichtung 47 wird der Wasserdampf zu flüssigem Wasser kondensiert und der Wasserstoff und das Kohlenmonoxid werden gespeichert oder dem Prozess an geeigneter Stelle zugeführt, wie oben beschrieben. Das kondensierte Wasser ist nicht mehr belastet und kann in die Umwelt abgeleitet werden.

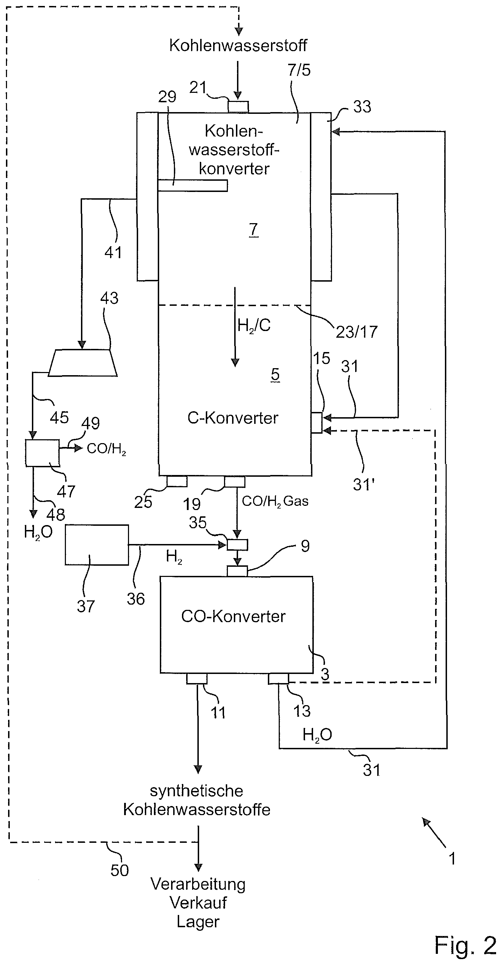

Der Aufbau der in Fig. 2 gezeigten Vorrichtung 1 entspricht im Wesentlichen dem in Fig. 1 gezeigten Aufbau. Daher werden die gleichen Bezugszeichen verwendet, um ähnliche oder gleiche Elemente zu bezeichnen. Die Beschreibung der gleichen Elemente wird hier weggelassen. Anders als bei der Vorrichtung aus Fig. 1 sind bei der Vorrichtung 1 der Fig. 2 der Kohlenwasserstoffkonverter 7 und der C-Konverter 5 zu einem kombinierten Konverter 7/5 integriert und haben einen gemeinsamen Prozessraum, der zwei Zonen aufweist, nämlich eine Kohlenwasserstoffkonverterzone 7 und eine C-Konverterzone 5. Der Übergang zwischen den zwei Zonen 7 und 5 ist in Fig. 2 durch eine gestrichelte Übergangslinie 23/17 dargestellt. In der Zone 7 über der Übergangslinie 23/17 ist ein Plasmabrenner 29 angeordnet, und im Betrieb erfolgt dort die Aufspaltung von eingeleiteten Kohlenwasserstoffen zu C-Partikeln und Wasserstoff. In der Zone 5 unter der Übergangslinie 23/17 erfolgt im Betrieb die Einleitung des dampfförmigen Produktwassers (wie oben erwähnt enthält der Dampf hauptsächlich Wasser und geringe Anteile von Kohlenmonoxid und Wasserstoff). Die Übergangslinie 23/17 beim Übergang der zwei Zonen 7, 5 entspricht vom Prinzip her dem C-Ausgang 23 und dem C-Eingang 17 der Ausführung gemäß Fig. 1. Der restliche Aufbau der Vorrichtung in Fig. 2 entspricht der Ausführung gemäß Fig. 1 und wird daher hier nicht noch einmal genau beschrieben.

Der Betrieb der Vorrichtung in Fig. 2 läuft ähnlich ab, wie oben für Fig. 1 beschrieben. Kohlenwasserstoffe enthaltende Fluide (insbesondere in Gasform) werden über den Kohlenwasserstoffeingang 11 in die Kohlenwasserstoffkonverterzone 7 eingeleitet. Wenn der Kohlenwasserstoff beispielsweise Methan (CH₄) ist, so entstehen 1 mol Kohlenstoff und 2 mol Wasserstoff aus 1 mol Methan. Bei anderen Kohlenwasserstoffen ergeben sich entsprechend andere Molverhältnisse von Kohlenstoff und Wasserstoff. Die Kohlenwasserstoffe werden in der Kohlenwasserstoffkonverterzone 7 bei etwa 1600°C gemäß der folgenden Reaktionsgleichung umgewandelt, wobei die zugeführte Energie Wärme ist, die im Plasma mittels elektrischer Energie erzeugt wird:

CₙHₘ + Energie → n C + m/2 H₂

Der Wasserstoff und der Kohlenstoff liegen nach der Aufspaltung als ein Gemisch vor, d.h. als H₂/C-Aerosol.

Das H₂/C-Aerosol wird aus der Kohlenwasserstoffkonverterzone 7 in Richtung der Übergangslinie 23/17 geleitet und in die C-Konverterzone 5 geleitet. Über die Übergangslinie 23/17 wird also im Betrieb nicht nur Kohlenstoff sondern auch Wasserstoff geleitet. Der Wasserstoff dient als Trägergas für den Kohlenstoff (C-Partikel) und beeinträchtigt nicht den Umwandlungsprozess in der C-Konverterzone 5. Da das aus der Kohlenwasserstoffkonverterzone 7 austretende H₂/C-Aerosol eine hohe Temperatur aufweist (bevorzugt über 1000°C), kann die darin enthaltene Wärmeenergie zum Erhalten der erforderlichen Temperatur für den Umwandlungsprozess in der C-Konverterzone 5 verwendet werden, in der vorzugsweise eine Temperatur von ca. 1000°C herrscht.

In die C-Konverterzone 5 wird der heiße Dampf (Wasserdampf, Wasserstoff und Kohlenmonoxid) aus der Produktwasserleitung 31 über den Eingang 15 für wenigstens Wasser eingeleitet. So wird Wasserdampf mit dem H₂/C-Aerosol vermischt und so mit dem heißen Kohlenstoff in Kontakt gebracht. In der C-Konverterzone 5 wird eine hohe Temperatur aufrecht erhalten (> 800°C und insbesondere bevorzugt bei > 1000°C), da es sich um eine endotherme Reaktion handelt und die Water-Shift-Reaktion, die zu ihr in Konkurrenz steht, eine exotherme Reaktion ist. Entweder die Menge des in den C-Konverter 5 eingeleiteten Wassers oder die Menge des Kohlenstoffs kann über geeignete Mittel gesteuert und/oder geregelt werden.

C + H₂O → CO + H₂;

ΔH = +131,38 kJ/mol

Allerdings ist auch hier das Boudouard-Gleichgewicht der begrenzende Faktor, weswegen bei Temperaturen oberhalb von 1000°C und in Abwesenheit eines Wasserüberschusses fast ausschließlich ein Gemisch von Kohlenmonoxid und Wasserstoff vorliegt. Der eingeleitete Dampf ist schon auf eine hohe Temperatur von ca. 700 - 900°C vorgewärmt, da das Produktwasser bereits zur Kühlung der Kohlenwasserstoffkonverterzone 7 des kombinierten Konverters 7/5 durch den Wärmetauscher 33 geleitet wurde. Ein Teil der im Produktwasser gelösten Kohlenwasserstoffe wird durch die Abwärme der Kohlenwasserstoffkonverterzone 7 bereits im Wärmetauscher 33 in Kohlenstoff und Wasserstoff aufgespaltet. Bei der hohen Temperatur in der C-Konverterzone 5 werden auch Kohlenwasserstoffe, die möglicherweise noch im dampfförmigen Produktwasser mitgeführt werden, in Kohlenstoff und Wasserstoff aufgespaltet.

Bei einer nicht erfindungsgemäß optionalen Ausführung, bei der das Produktwasser durch die Produktwasserleitung 31' geleitet wurde und somit nicht durch den Wärmetauscher 33, hat das Produktwasser eine geringere Temperatur, die etwa der Betriebstemperatur des CO-Konverters 3 entspricht (250 - 350°C).

Das Gasgemisch aus CO und H₂ aus der C-Konverterzone 5 wird dann zum CO-Konverter 3 geleitet und durch das oben erwähnte Fischer-Tropsch-Verfahren in synthetische Kohlenwasserstoffe und Produktwasser umgewandelt. Das Produktwasser wird durch die Produktwasserleitung 31 wieder in der oben erwähnten Weise in die C-Konverterzone 5 geleitet.

Auch bei der Vorrichtung gemäß Fig. 2 kann im Betrieb etwa die Hälfte des im CO-Konverter 3 erzeugten Produktwassers wieder in die C-Konverterzone 5 eingeleitet werden. Somit ergibt sich gegenüber dem Stand der Technik der Vorteil, dass nur noch halb so viel Produktwasser gereinigt werden muss, bevor es in die Umwelt abgeleitet werden kann. Wie oben mit Bezug auf Fig. 1 beschrieben, kann auch bei der Ausführung der Fig. 2 eine weitere Verbesserung erreicht werden, wenn mehr Produktwasser als in der C-Konverterzone 5 benötigt durch den Wärmetauscher 33 geleitet wird und verdampft wird. Durch die hohen Temperaturen im Wärmetauscher zerfallen die im Produktwasser gelösten Kohlenwasserstoffe (Zerfalltemperatur > 450°C) bereits im Wärmetauscher 33 in Kohlenstoff und Wasserstoff. Der Wärmetauscher funktioniert also wie ein thermischer Kohlenwasserstoffkonverter. Der Kohlenstoff reagiert im Wärmetauscher 33 gleich mit dem ebenfalls vorhandenen Wasserdampf gemäß der oben genannten Gleichung C + H₂O → CO + H₂, und es entsteht ein Dampfgemisch aus Wasserdampf, Kohlenmonoxid und Wasserstoff. Der überschüssige Anteil des Dampfgemisches, der nicht in den C-Konverter 5 eingeleitet wird, kann über die Dampfleitung 41 zur Dampfturbine 43 geleitet werden. Nachdem das Dampfgemisch an der Dampfturbine 43 Arbeit verrichtet hat, wird es über die Turbinenabgasleitung 45 zur Trennvorrichtung 47 geleitet. In der Trennvorrichtung 47 wird der Wasserdampf zu flüssigem Wasser kondensiert und der Wasserstoff und das Kohlenmonoxid werden gespeichert oder dem Prozess an geeigneter Stelle zugeführt, wie oben beschrieben. Das kondensierte Wasser ist nicht mehr belastet und kann in die Umwelt abgeleitet werden.

Bei allen Ausführungen reicht die in den C-Partikeln enthaltene Wärme, um das Wasser auf die im C-Konverter oder in der C-Konverterzone gewünschte Temperatur zu bringen. Nur für den Fall, dass die im Kohlenwasserstoffkonverter 3 erzeugte Wärme nicht ausreicht, um die gewünschte Umwandlungstemperatur von ungefähr 1000°C zu erreichen, kann eine optionale zusätzliche Heizeinheit zum Erwärmen des C-Konverters oder der C-Konverterzone 9 vorgesehen sein. Eine solche zusätzliche Heizeinheit kann auch als eine Vorheizeinheit im Bereich einer Zuleitung für das Wasser oder den Kohlenstoff eingesetzt werden. Die Aufheizung aller Teile rein über die im Kohlenwasserstoffkonverter 7 erzeugte Wärme könnte anfangs zu lange dauern. Die zusätzliche Heizeinheit kann daher auch nur für den Start der Vorrichtung eingesetzt werden, um zunächst die Konverter oder medienführende Teile der Vorrichtung auf eine Anfangstemperatur zu bringen, damit das System schneller einen gewünschten Temperaturzustand erreicht.

Abschließend kann noch folgendes Beispiel zur Umwandlung in den einzelnen Konvertern genannt werden:
a) Klarzahlen:
   Einleitung in den Kohlenwasserstoffkonverter 7: 1043023 t Methan
   Einleitung in den C-Konverter 5: 758115 t Wasser
   Ausgabe aus dem CO-Konverter: 1180527 t Kohlenwasserstoffe (Produkt) Nebenprodukt aus dem CO-Konverter: 1516231 t Wasser
   Verbrauchtes CO₂: 925999 t
b) Auf 1000 t Methan als Ausgangsstoff normiert:
   Einleitung in den Kohlenwasserstoffkonverter 7: 1000 t Methan
   Einleitung in den C-Konverter 5: 727 t Wasser
   Ausgabe aus dem CO-Konverter: 1132 t Kohlenwasserstoffe (Produkt) Nebenprodukt aus dem CO-Konverter: 1454 t Wasser
   Verbrauchtes CO₂: 888 t

Prinzipiell kann man das Verfahren auch bei einer gewöhnlichen GtL-Anlage (GtL = Gas to Liquid) verwenden, die einen Dampfreformator und einen Fischer-Tropsch-Konverter aufweist und bei der das Synthesegas mittels Dampfreformation von Methan oder anderen Kohlenwasserstoffen gewonnen wird. Die Grundgleichung ist dabei meist:

CH₄+3H₂O=CO+3H₂+2H₂O

Aus prozesstechnischen Gründen werden bei der Dampfreformation gemäß dem Stand der Technik etwa drei mol Wasser eingesetzt, von denen dann zwei Mol Wasser nach dem Reformationsschritt übrig bleiben (aber mit erhitzt wurden). Bei einer gewöhnlichen GtL-Anlage mit Dampfreformator könnte man unter Anwendung der in dieser Beschreibung dargelegten Prinzipien das gesamte Prozesswasser des CO-Konverters 3, welches als Nebenprodukt erzeugt wird, in den Dampfreformator zurückführen. Das nach der Pyrolyse der Kohlenwasserstoffe übrig bleibende Wasser wird dann vor dem CO-Konverter 3 abgeschieden.

Die Erfindung wurde anhand bevorzugter Ausführungen beschrieben, wobei die einzelnen Merkmale der beschriebenen Ausführungen frei miteinander kombiniert werden können und/oder ausgetauscht werden können, sofern sie kompatibel sind. Ebenso können einzelne Merkmale der beschriebenen Ausführungen weggelassen werden, sofern sie nicht zwingend notwendig sind.

## Patentansprüche

1. Verfahren zur Herstellung von synthetischen Kohlenwasserstoffen, welches folgende Schritte aufweist:
Aufspalten eines kohlenwasserstoffhaltigen Fluids in einem Kohlenwasserstoffkonverter (7) zu einem Gemisch aus Kohlenstoff und Wasserstoff durch Zuführen von Energie unter Sauerstoffabschluss, wobei die Energie wenigstens teilweise aus Wärme besteht,
a) Erzeugen von Synthesegas durch In-Kontakt-bringen des Gemisches aus Kohlenstoff und Wasserstoff mit Wasser bei einer Temperatur von 800 - 1700 °C;
b) Leiten des Synthesegases über eine Synthesegasleitung zu einem CO-Konverter (3);
c) Umwandeln des Synthesegases in synthetische, funktionalisierte und/oder nicht-funktionalisierte Kohlenwasserstoffe mittels eines Fischer-Tropsch-Verfahrens in dem CO-Konverter (3) durch In-Kontakt-bringen mit einem geeigneten Katalysator, wobei Wasser als Nebenprodukt anfällt, in dem ein Teil der synthetischen Kohlenwasserstoffe gelöst ist; und
d) Zuführen eines Teils des als Nebenprodukt erzeugten Wassers zum Schritt a);
e) Zuführen eines Teils des als Nebenprodukt erzeugten Wassers zu einem Wärmetauscher (33), der zum Kühlen des Kohlenwasserstoffkonverters (7) oder einer Synthesegasleitung zu dem CO-Konverter (3) verwendet wird, wodurch der Teil des als Nebenprodukt erzeugten Wassers bei einer Temperatur oberhalb der Zerfallstemperatur der im Wasser gelösten synthetischen Kohlenwasserstoffe verdampft wird; und
f) Leiten des erzeugen Dampfes zu einer Dampfturbine (43), um diese anzutreiben.

2. Verfahren nach Anspruch 1, wobei die Temperatur des Wassers beim Zuführen zum Schritt a) auf mindestens eine Zerfallstemperatur gesteuert oder geregelt wird, bei der die darin gelösten synthetischen Kohlenwasserstoffe in Kohlenstoff und Wasserstoff zerfallen.

3. Verfahren nach Anspruch 1 oder 2, wobei der Kohlenstoff als C-Partikel vorliegt, die mit Wasserstoff zu einem Aerosol vermischt sind.

4. Verfahren nach Anspruch 1, wobei der Kohlenwasserstoffkonverter (7) mittels zumindest teilweise durch das als Nebenprodukt erzeugte Wasser gekühlt wird.

5. Vorrichtung (1) zur Herstellung von synthetischen Kohlenwasserstoffen, die folgendes aufweist:
einen Kohlenwasserstoffkonverter (7) zum Aufspalten eines Kohlenwasserstoff enthaltenden Fluids zu einem H₂/C-Aerosol, der wenigstens einen Prozessraum mit wenigstens einem Kohlenwasserstoffeingang (21) für ein Kohlenwasserstoff enthaltendes Fluid und wenigstens einem C-Ausgang (23) für C-Partikel oder H₂/C-Aerosol und wenigstens eine Einheit (29) zum Einbringen von Energie in den Prozessraum aufweist, wobei die Energie wenigstens teilweise aus Wärme besteht;
einen C-Konverter (5) zur Umwandlung von Kohlenstoff oder Kohlenwasserstoff und Wasser in Synthesegas, der einen Prozessraum mit einem Eingang (15) für wenigstens Wasser, einen C-Eingang (17) für wenigstens Kohlenstoff und einen Synthesegasausgang (19) aufweist; wobei der C-Ausgang (23) des Kohlenwasserstoffkonverters (7) mit dem C-Eingang (17) für wenigstens Kohlenstoff des C-Konverters (5) verbunden ist;
einen CO-Konverter (3), der geeignet ist, ein Fischer-Tropsch-Verfahren zur Herstellung von synthetischen funktionalisierten und/oder nicht-funktionalisierten Kohlenwasserstoffen auszuführen und einen Prozessraum aufweist, in dem ein Katalysator angeordnet ist und mit Mitteln zum Leiten des Synthesegases in Kontakt mit dem Katalysator, und mit einer Steuereinheit zum Steuern oder Regeln der Temperatur des Katalysators und/oder des Synthesegases auf eine vorbestimmte Temperatur, wobei der Prozessraum des CO-Konverters (3) mit dem Synthesegasausgang (19) des C-Konverters (5) verbunden ist;
wobei der CO-Konverter (3) einen Wasserausgang (13) für Wasser aufweist, welches während der Erzeugung von synthetischen Kohlenwasserstoffen als Nebenprodukt erzeugt wird; und
eine Wasserleitung (31, 31'), welche vom Wasserausgang (13) des CO-Konverters (3) zum Eingang (15) für wenigstens Wasser des C-Konverters (5) verläuft;
Wärmetauschermittel (33) zum Kühlen des Kohlenwasserstoffkonverters (7) oder einer Synthesegasleitung zwischen dem C-Konverter (5) und dem CO-Konverter (3), und wobei eine Wasserleitung (31) vom Wasserausgang (13) des CO-Konverters (3) zu den Wärmetauschermitteln (33) und von den Wärmetauschermitteln (33) zum Eingang (15) für wenigstens Wasser des C-Konverters (5) verläuft; und
eine Dampfturbine (43) mit Turbinenschaufeln und einem Dampfeingang, wobei der Dampfeingang der Dampfturbine (43) mit den Wärmetauschermitteln (33) verbunden ist und geeignet ist, einen Teil des als Nebenprodukt erzeugten und durch die Wärmetauschermittel (33) geleiteten Wassers als Dampf zu den Turbinenschaufeln zu leiten.

6. Vorrichtung (1) nach Anspruch 5, wobei der Kohlenwasserstoffkonverter (7), sein C-Ausgang (23), der C-Konverter (5) und sein C-Eingang (17) für wenigstens Kohlenstoff so ausgebildet sind, dass im Kohlenwasserstoffkonverter (7) gebildeter Kohlenstoff und Wasserstoff gemeinsam in den C-Konverter (5) geleitet werden.

7. Vorrichtung (1) nach einem der Ansprüche 5 oder 6, wobei der Kohlenwasserstoffkonverter (7) und der C-Konverter (5) zu einem kombinierten Konverter 7/5 zusammengefasst sind;
wobei der Prozessraum des Kohlenwasserstoffkonverters (7) und der Prozessraum des C-Konverters (5) durch eine Kohlenwasserstoffkonverterzone und eine C-Konverterzone des kombinierten Konverters gebildet werden; und
wobei der C-Ausgang (23) des Kohlenwasserstoffkonverters (7) und der C-Eingang (17) für wenigstens Kohlenstoff des C-Konverters (5) durch einen Übergang zwischen der Kohlenwasserstoffkonverterzone und der C-Konverterzone gebildet werden.

## Claims

1. A method for producing synthetic hydrocarbons which comprises the following steps:
decomposing a hydrocarbon-containing fluid in a hydrocarbon converter (7) by supplying energy in the absence of oxygen to form a mixture of carbon and hydrogen, wherein the energy consists at least partly of heat;
a) producing synthesis gas by bringing the mixture of carbon and hydrogen into contact with water at a temperature of 800 - 1700°C;
b) supplying the synthesis gas to a CO converter (3) via a synthesis gas line;
c) converting the synthesis gas into synthetic functionalised and/or non-functionalised hydrocarbons by means of a Fischer Tropsch process in the CO converter (3) by bringing into contact with a suitable catalyst, wherein water results as a by-product in which a portion of the synthetic hydrocarbons is dissolved; and
d) supplying a portion of the water that was produced as a by-product to the step a);
e) supplying a portion of the water that is produced as a by-product to a heat exchanger (33), that is adapted for cooling the hydrocarbon converter (7) or a synthesis gas line to the CO-converter (3), whereby a portion of the water that is produced as a by-product is vaporised at a temperature above the decomposing temperature of the synthetic hydrocarbons dissolved in the water; and
f) supplying the vapour to a steam turbine (43), wherein the vapour is used for propelling the steam turbine (43).

2. The method according to Claim 1, wherein the temperature of the water, when being supplied to the step a), is controlled or regulated to at least a decomposing temperature at which the synthetic hydrocarbons dissolved therein are decomposed into carbon and hydrogen.

3. The method according to Claim 1 or 2, wherein the carbon is present as C-particles which are mixed with hydrogen to form an aerosol.

4. The method according to Claim 1, wherein the hydrocarbon converter (7) is at least partly cooled by the water that was produced as a by-product.

5. An apparatus (1) for producing synthetic hydrocarbons which comprises the following:
a hydrocarbon converter (7) for decomposing a hydrocarbon-containing fluid to form an H₂/C-aerosol which comprises at least one process chamber having at least one hydrocarbon inlet (21) for a hydrocarbon-containing fluid and at least one C-outlet (23) for C-particles or a H₂/C-aerosol and at least one unit (29) for introducing energy into the process chamber, wherein the energy consists at least partly of heat;
a C-converter (5) for converting carbon or hydrocarbon and water into a synthesis gas which comprises a process chamber having an inlet (15) for at least water, a C-inlet (17) for at least carbon and a synthesis gas outlet (19); wherein the C-outlet (23) of the hydrocarbon converter (7) is connected to the C-inlet (17) for at least carbon of the C-converter (5);
a CO-converter (3) which is adapted for carrying out a Fischer Tropsch process for the production of synthetic functionalised and/or non-functionalised hydrocarbons and which comprises a process chamber in which a catalyst is arranged and having means for guiding the synthesis gas into contact with the catalyst and
having a control unit for controlling or regulating the temperature of the catalyst and/or the synthesis gas to a pre-determined temperature, wherein the process chamber of the CO-converter (3) is connected to the synthesis gas outlet (19) of the C-converter (5);
wherein the CO-converter (3) comprises a water outlet (13) for water which is produced as a by-product during the process of producing synthetic hydrocarbons; and
a water line (31, 31') which runs from the water outlet (13) of the CO-converter (3) to the inlet (15) for at least water of the C-converter (5);
heat exchanger means (33) for cooling the hydrocarbon converter (7) or a synthesis gas line between the C-converter (5) and the CO-converter (3), and wherein a water line (31) runs from the water outlet (13) of the CO-converter (3) to the heat exchanger means (33) and from the heat exchanger means (33) to the inlet (15) for at least water of the C-converter (5); and
a steam turbine (43) having turbine blades and a steam inlet;
wherein the steam inlet of the steam turbine (43) is connected to the heat exchanger means (33) and is adapted for guiding a portion of the water which is produced as a by-product and is fed through the heat exchanger means (33) to the turbine blades in the form of a vapour.

6. The apparatus (1) according to Claim 5, wherein the hydrocarbon converter (7), the C-outlet (23) thereof, the C-converter (5) and the C-inlet (17) thereof for at least carbon are constructed in such a way that carbon and hydrogen which are formed in the hydrocarbon converter (7) are fed together into the C-converter (5).

7. The apparatus (1) according to any of the Claims 5 or 6, wherein the hydrocarbon converter (7) and the C-converter (5) are combined into a combined converter 7/5;
wherein the process chamber of the hydrocarbon converter (7) and the process chamber of the C-converter (5) are formed by a hydrocarbon converter zone and a C-converter zone of the combined converter; and
wherein the C-outlet (23) of the hydrocarbon converter (7) and the C-inlet (17) for at least carbon of the C-converter (5) are formed by a transition between the hydrocarbon converter zone and the C-converter zone.

## Revendications

1. Procédé destiné à la production d'hydrocarbures de synthèse, qui comprend les étapes suivantes :
la décomposition d'un fluide contenant des hydrocarbures dans un convertisseur d'hydrocarbures (7) pour former un mélange de carbone et d'hydrogène en fournissant de l'énergie en l'absence d'oxygène, dans lequel l'énergie consiste au moins en partie en chaleur ;
a) la production d'un gaz de synthèse en amenant le mélange de carbone et d'hydrogène en contact avec de l'eau à une température de 800 à 1700 °C ;
b) la fourniture du gaz de synthèse à un convertisseur de CO (3) par l'intermédiaire d'une conduite de gaz de synthèse ;
c) la conversion du gaz de synthèse en hydrocarbures synthétiques fonctionnalisés et/ou non fonctionnalisés au moyen d'un procédé Fischer-Tropsch dans le convertisseur de CO (3) en l'amenant en contact avec un catalyseur approprié, dans lequel l'eau est obtenue comme sous-produit dans lequel une partie des hydrocarbures synthétiques est dissoute ; et
d) la fourniture d'une partie de l'eau qui a été produite comme sous-produit à l'étape a) ;
e) la fourniture d'une partie de l'eau qui a été produite comme sous-produit à un échangeur de chaleur (33), qui est adapté pour refroidir le convertisseur d'hydrocarbures (7) ou une conduite de gaz de synthèse allant au convertisseur de CO (3), d'où il résulte qu'une partie de l'eau qui est produite comme sous-produit est vaporisée à une température supérieure à la température de décomposition des hydrocarbures synthétiques dissous dans l'eau ; et
f) la fourniture de la vapeur à une turbine à vapeur (43), dans laquelle la vapeur est utilisée pour propulser la turbine à vapeur (43).

2. Procédé selon la revendication 1, dans lequel la température de l'eau, lorsqu'elle est introduite à l'étape a), est contrôlée ou régulée à au moins une température de décomposition à laquelle les hydrocarbures synthétiques dissous dans celle-ci sont décomposés en carbone et hydrogène.

3. Procédé selon la revendication 1 ou 2, dans lequel le carbone est présent sous forme de particules de C qui sont mélangées avec de l'hydrogène pour former un aérosol.

4. Procédé selon la revendication 1, dans lequel le convertisseur d'hydrocarbures (7) est au moins partiellement refroidi par l'eau qui a été produite comme sous-produit.

5. Appareil (1) destiné à la production d'hydrocarbures de synthèse, qui comprend les éléments suivants :
un convertisseur d'hydrocarbures (7) destiné à décomposer un fluide contenant des hydrocarbures pour former un aérosol H₂/C qui comprend au moins une chambre de traitement ayant au moins une admission d'hydrocarbures (21) pour un fluide contenant des hydrocarbures et au moins une sortie de C (23) pour des particules de C ou un aérosol H₂/C et au moins une unité (29) destinée à introduire de l'énergie dans la chambre de traitement, dans lequel l'énergie consiste au moins partiellement en chaleur ;
un convertisseur de C (5) destiné à convertir du carbone ou un hydrocarbure et de l'eau en un gaz de synthèse qui comprend une chambre de traitement ayant une admission (15) pour au moins de l'eau, une admission de C (17) pour au moins du carbone et une sortie de gaz de synthèse (19) ; dans lequel la sortie de C (23) du convertisseur d'hydrocarbures (7) est connectée à l'admission de C (17) pour au moins le carbone du convertisseur de C (5) ;
un convertisseur de CO (3) qui est adapté pour mettre en oeuvre un procédé Fischer-Tropsch pour la production d'hydrocarbures synthétiques fonctionnalisés et/ou non fonctionnalisés et qui comprend une chambre de traitement dans laquelle un catalyseur est placé et ayant des moyens pour amener le gaz de synthèse en contact avec le catalyseur et ayant une unité de commande pour contrôler ou réguler la température du catalyseur et/ou du gaz de synthèse à une température prédéterminée, dans lequel la chambre de traitement du convertisseur de CO (3) est connectée à la sortie de gaz de synthèse (19) du convertisseur de C (5) ;
dans lequel le convertisseur de CO (3) comprend une sortie d'eau (13) pour l'eau qui est produite comme sous-produit pendant le traitement de production d'hydrocarbures synthétiques ; et
une conduite d'eau (31, 31') qui s'étend depuis la sortie d'eau (13) du convertisseur de CO (3) jusqu'à l'admission (15) pour au moins l'eau du convertisseur de C (5) ;
des moyens échangeur de chaleur (33) pour refroidir le convertisseur d'hydrocarbures (7) ou une conduite de gaz de synthèse entre le convertisseur de C (5) et le convertisseur de CO (3),et dans lequel une conduite d'eau (31) s'étend depuis la sortie d'eau (13) du convertisseur de CO (3) jusqu'aux moyens échangeur de chaleur (33) et depuis les moyens échangeur de chaleur (33) jusqu'à l'admission (15) pour au moins l'eau du convertisseur de C (5) ; et
une turbine à vapeur (43) ayant des pales de turbine et une admission de vapeur ;
dans lequel l'admission de vapeur de la turbine à vapeur (43) est connectée aux moyens échangeur de chaleur (33) et est adaptée pour amener une partie de l'eau qui est produite comme sous-produit et est fournie au moyen des moyens échangeur de chaleur (33) aux pales de la turbine sou forme de vapeur.

6. Appareil (1) selon la revendication 5, dans lequel le convertisseur d'hydrocarbures (7), sa sortie C (23), le convertisseur de C (5) et son admission de C (17) pour au moins du carbone sont conçus de telle sorte que le carbone et l'hydrogène qui sont formés dans le convertisseur d'hydrocarbures (7) sont fournis ensemble dans le convertisseur de C (5).

7. Appareil (1) selon l'une des revendications 5 ou 6, dans lequel le convertisseur d'hydrocarbures (7) et le convertisseur de C (5) sont combinés pour former un convertisseur combiné 7/5 ;
dans lequel la chambre de traitement du convertisseur d'hydrocarbures (7) et la chambre de traitement du convertisseur de C (5) sont formées par une zone convertisseur d'hydrocarbures et une zone convertisseur de C du convertisseur combiné ; et
dans lequel la sortie de C (23) du convertisseur d'hydrocarbures (7) et l'admission de C (17) pour au moins le carbone du convertisseur de C (5) sont formées par une transition entre la zone convertisseur d'hydrocarbures et la zone convertisseur de C.
